# EUROPÄISCHE PATENTANMELDUNG

(11) **EP 2 966 309 A2**
(43) Veröffentlichungstag der Anmeldung: **13.01.2016**
(21) Anmeldenummer: 15175010.6
(22) Anmeldetag: 02.07.2015
(51) Int. Cl.: F16C 17/04, F16C 33/10, F01D 25/16, F01D 25/18, F16C 17/10

(54) **AXIALLAGER ODER KOMBINIERTES AXIAL-/RADIALLAGER**

(30) Priorität: 10.07.2014 DE 102014213466
(71) Anmelder: Bosch Mahle Turbo Systems GmbH & Co. KG, 70376 Stuttgart (DE)
(72) Erfinder: GAUGER, Stephan, 73730 Esslingen (DE); HASLINGER, Fabian, 68163 Mannheim (DE)
(74) Vertreter: BRP Renaud & Partner mbB Rechtsanwälte Patentanwälte Steuerberater

(57) **Zusammenfassung**

Die Erfindung betrifft ein Axiallager (1) oder ein kombiniertes Axial-/Radiallager (12), insbesondere für einen Abgasturbolader (2), das im Wesentlichen eine scheiben- oder zylinderförmige Gestalt und eine zentrisch angeordnete Durchtrittsöffnung (10) für eine Welle aufweist. Erfindungswesentlich ist dabei, dass wenigstens eine kreissegmentartige Öltasche (3), eine sich daran kreissegmentartig anschließende Keilfläche (4), eine sich an die Keilfläche (4) anschließende Rastfläche (5), ein ringsegmentförmig verlaufender Innenbund (6) vorgesehen ist, der als Dichtsteg (7) ausgebildet ist und vorzugsweise unterbrechungsfrei in die Rastfläche (5) übergeht.

## Beschreibung

Die vorliegende Erfindung betrifft ein Axiallager oder ein kombiniertes Axial-/Radiallager, insbesondere für einen Abgasturbolader, das im Wesentlichen eine scheiben- oder zylinderförmige Gestalt aufweist, gemäß dem Oberbegriff des Anspruchs 1. Die Erfindung betrifft außerdem einen Abgasturbolader mit zumindest einem derartigen Axiallager oder einem solchen kombinierten Axial-/Radiallager.

Bedingt durch zukünftig strengere Abgasvorschriften werden zunehmend Maßnahmen gesucht, um den CO₂-Ausstoß von Verbrennungsmotoren reduzieren zu können. Eine gängige Maßnahme hierfür ist die Verbrauchsreduzierung durch Downspeeding/Downsizing kombiniert mit einer Abgasturboaufladung. Der Abgasturbolader hat dabei in der Regel ein hydrodynamisches Gleitlager, welches in ein Axial- und Radiallager aufgeteilt ist. Um den CO₂-Ausstoß von turboaufgeladenen Verbrennungsmotoren weiter reduzieren zu können, ist insbesondere eine optimierte Lagerung eines Rotors in einem Abgasturbolader hilfreich.

Aus der EP 2 140 114 B1 ist ein gattungsgemäßes Axiallager mit einer im Wesentlichen scheibenförmigen Gestalt mit einer ersten und zweiten Seite bekannt, welches eine zentral angeordnete Durchgangsöffnung für eine Welle aufweist. Darüber hinaus besitzt das bekannte Axiallager mindestens einen zumindest teilweise oder vollständig umlaufenden Segmentabschnitt auf der ersten und der zweiten Seite des Axiallagers, wobei der jeweilige Segmentabschnitt als konzentrisch um die Durchtrittsöffnung angeordnete Vertiefung in der jeweiligen Seite des Axiallagers ausgebildet ist und in dem jeweiligen Segmentabschnitt wenigstens ein, eine Anlagefläche aufweisendes, tragendes Segment, angeordnet ist. Darüber hinaus ist wenigstens eine Öltasche vorgesehen, die radial außerhalb des Segmentabschnitts angeordnet ist sowie eine schlitzförmige, zur ersten Seite hin offene Aussparung, die so angeordnet und derartig ausgebildet ist, dass sie wenigstens eine Öltasche für eine Ölzufuhr zu den Anlageflächen der tragenden Segmente auf beiden Seiten des Axiallagers mit dem mindestens je einem Segmentabschnitt auf der ersten und der zweiten Seite des Axiallagers verbindet. Hierdurch soll insbesondere bei einem Kaltstart des Verbrennungsmotors eine ausreichende Schmierung gewährleistet werden.

Die vorliegende Erfindung beschäftigt sich mit dem Problem, für ein Axiallager der gattungsgemäßen Art eine verbesserte oder zumindest eine alternative Ausführungsform anzugeben, mit welcher insbesondere Reibleistungsverluste bei gleichzeitig definierter Tragfähigkeit minimiert werden können.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein Axiallager oder ein kombiniertes Axial-/Radiallager mit einer im Wesentlichen scheiben- oder zylinderförmigen Gestalt und einer ersten und einer zweiten Seite sowie mit einer zentral angeordneten Durchtrittsöffnung für eine Welle mit einer kreissegmentartigen Öltasche auszustatten, an die sich in Umfangsrichtung kreissegmentartig eine Keilfläche anschließt. Diese Keilfläche wiederum mündet in eine erhabene Rastfläche/Kontaktfläche, wobei zusätzlich ein ringsegmentförmig verlaufender Innenbund vorgesehen ist, der als Dichtsteg ausgebildet ist und über den Umfang frei gestaltet werden kann, vorzugsweise aber unterbrechungsfrei in die Rastfläche bzw. Kontaktfläche übergeht. Den Kern der Erfindung bildet dabei der Innenbund (Dichtsteg) an der Innenseite, welcher bei einem Druckaufbau in der Keilfläche des Axiallagers oder des kombinierten Axial-/Radiallagers einen geringeren Druckabfall nach innen bewirkt und dadurch die Tragfähigkeit des Axiallagers bzw. des kombinierten Axial-/Radiallagers deutlich steigert. Dadurch kann für eine fest definierte Tragfähigkeit, das Axiallager / Axial-/Radiallager im Vergleich zur konventionellen Ausführung kleiner gestaltet werden, wodurch die Reibleistungsverluste reduziert werden. Zudem wird auch ein unerwünschter Abfluss des Schmiermittels durch die Durchtrittsöffnung zumindest reduziert und dadurch die Lagerung verbessert. Durch die reduzierte Reibleistung bei identischer Tragfähigkeit des Axiallagers / Axial-/Radiallagers wird der Kraftstoffverbrauch des Verbrennungsmotors reduziert und damit indirekt auch dessen CO₂-Ausstoß. Im Vergleich zu alternativen leichtgängigen Lagerungen, wie beispielsweise Wälzlagern, bietet das erfindungsgemäße Axiallager / Axial-/Radiallager jedoch den Vorteil, vergleichsweise kostengünstig hergestellt werden zu können.

Bei einer vorteilhaften Weiterbildung der erfindungsgemäßen Lösung weist die Keilfläche eine in Umfangsrichtung kontinuierliche oder diskontinuierliche Steigung auf. Durch eine kontinuierliche Steigung wird ein kontinuierlicher Druckaufbau ermöglicht, während durch eine diskontinuierliche Steigung beispielsweise zunächst ein Sammeln von Schmiermittel, insbesondere Öl, mit einem sich daran anschließenden raschen Druckaufbau erreichen lässt.

Bei einer weiteren vorteilhaften Ausführungsform der erfindungsgemäßen Lösung ist ein zumindest ringsegmentförmig verlaufender Außenbund vorgesehen, der ebenfalls als Dichtsteg ausgebildet ist. Durch einen derartig ausgebildeten Außenbund lässt sich das zur Schmierung bzw. zur Lagerung erforderliche Schmiermittel bzw. Öl zwischen dem inneren und dem äußeren Dichtsteg konzentrieren, ohne dass dabei ein übermäßiger Ölabfluss über den Innenrand bzw. den Außenrand des Axiallagers / Axial-/Radiallagers befürchtet werden muss.

Zweckmäßig geht der Innenbund oberflächenfluchtend in die Rastfläche über. Der Innenbund kann aber auch bereits vor der Rastfläche enden. Der Innenbund und die Rastfläche liegen darüber hinaus vorzugsweise in einer Ebene, so dass die Keilfläche schräg zum Innenbund und schräg zur Rastfläche ausgebildet ist. Ein Übergang zwischen der Keilfläche und dem Innenbund kann dabei ausgerundet oder mittels eines Knicks ausgeführt sein.

Bei einer weiteren vorteilhaften Ausführungsform der erfindungsgemäßen Lösung weist das Axiallager bzw. das Axial-/Radiallager zumindest auf der ersten Seite drei Öltaschen, drei Rastflächen, drei Keilflächen sowie drei Dichtstege auf.

Selbstverständlich kann dabei die gleiche Anzahl Öltaschen bzw. Rastflächen und Keilflächen auch auf der zweiten Seite angeordnet sein. Die Öltaschen sind dabei in Umfangsrichtung um 120° versetzt zueinander angeordnet und spiegelbildlich zu den Öltaschen auf der gegenüberliegenden Seite des Axiallagers / Axial-/Radiallagers angeordnet. Selbstverständlich können dabei auch vier oder mehr derartiger Lagerkomponenten (Öltaschen, Keilflächen und Rastflächen) vorgesehen, sowie die geometrische Anordnung variiert werden.

Die vorliegende Erfindung beruht weiter auf dem allgemeinen Gedanken, einen Abgasturbolader mit zumindest einem in den vorherigen Absätzen beschriebenen Axiallager bzw. kombinierten Axial-/Radiallager auszustatten. Hierdurch ist es möglich, eine deutlich reduzierte Reibleistung bei identischer Tragfähigkeit des Axiallagers zu erreichen, wodurch sich die Lagerung des Rotors des Abgasturboladers insgesamt verbessert und dadurch zu dessen Antrieb weniger Abgasenthalpie und damit verbunden weniger Kraftstoff benötigt wird. Durch die Reduzierung des Kraftstoffverbrauchs wird auch eine Reduzierung des CO₂-Ausstoßes des Verbrennungsmotors erreicht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht auf ein erfindungsgemäßes Axiallager / Axial-/Radiallager in einem Abgasturbolader,
- Fig. 2: eine Schrägansicht auf das erfindungsgemäße Axiallager / Axial-/Radiallager,
- Fig. 3: eine Darstellung wie in Fig. 2, jedoch aus einer anderen Perspektive,
- Fig. 4: eine Detailansicht des Axiallagers / Axial-/Radiallagers.

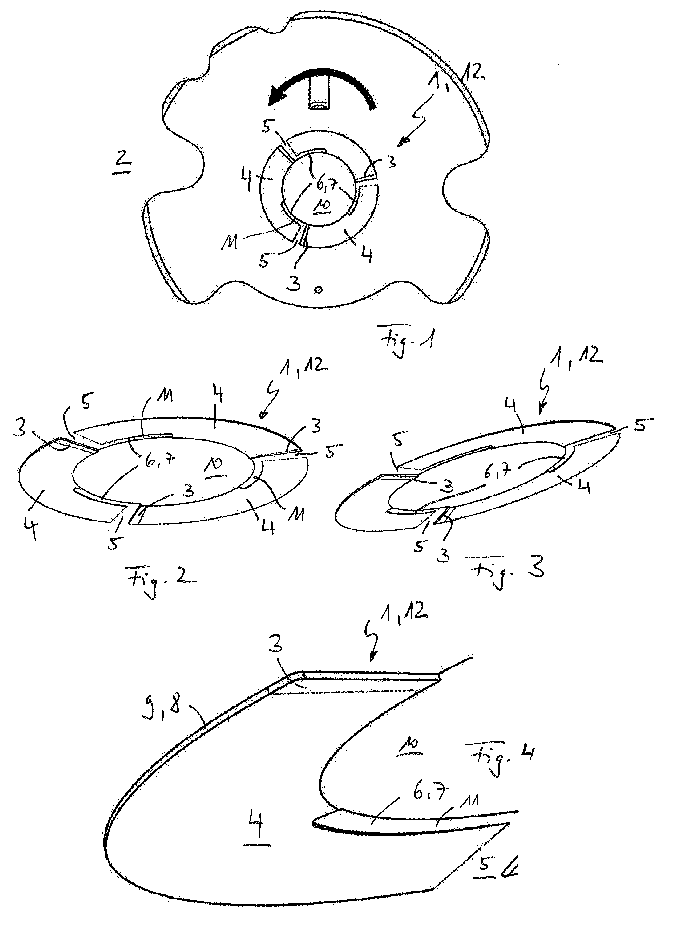

Entsprechend den Figuren 1 bis 4, weist ein erfindungsgemäßes Axiallager 1 oder ein kombiniertes Axial-/Radiallager 12, insbesondere für einen Abgasturbolader 2, eine im Wesentlichen scheiben- oder zylinderförmige Gestalt mit einer ersten und einer zweiten Seite auf. Erfindungsgemäß besitzt dabei das Axiallager 1 bzw. das Axial-/Radiallager 12 in Umfangsrichtung nacheinander angeordnet eine kreissegmentartige Öltasche 3, eine sich daran kreissegmentartig anschließende Keilfläche 4 sowie eine sich an die Keilfläche 4 anschließende Rastfläche 5. Im Folgenden wird dabei oftmals nur auf das Axiallager 1 Bezug genommen, wobei selbstverständlich klar ist, dass die zum Axiallager 1 gemachten Ausführungen in identischer Weise auch auf das erfindungsgemäße Axial-/Radiallager 12 anwendbar sind, welches insbesondere einstückig mit dem Axiallager 1 ausgebildet sein kann. Ebenso vorgesehen ist ein ringsegmentförmig verlaufender Innenbund 6, der als Dichtsteg 7 ausgebildet ist und vorzugsweise unterbrechungsfrei in die Rastfläche 5 übergeht. Mit einem derart ausgebildeten Axiallager 1 lässt sich die Reibleistung bei identischer Tragfähigkeit deutlich reduzieren und damit eine deutlich leichtgängigere Lagerung eines Rotors eines Abgasturboladers 2 erreichen, was wiederum zur Senkung des Kraftstoffverbrauchs und damit auch zu einer Senkung der CO₂-Emission führt.

Die Keilfläche 4 kann dabei in Umfangsrichtung eine kontinuierliche oder diskontinuierliche Steigung aufweisen und steigt von der tiefsten Stelle, d.h. von der Öltasche 3 hin zur höchsten Stelle, d.h. zur Rastfläche 5, an. Ebenfalls vorgesehen ist ein zumindest ringsegmentförmig verlaufender Außenbund 8 (vgl. Fig. 4), welcher als Dichtsteg 9 ausgebildet ist.

Sämtlichen gezeichneten Ausführungsformen des Axiallagers 1 / Axial-/Radiallager 12 ist dabei gemein, dass die Rastfläche 5 in Radialrichtung verläuft und der Innenbund 6 oberflächenfluchtend in die Rastfläche 5 übergeht. Ein Übergang zwischen der Keilfläche 4 und der Rastfläche 5 kann dabei mittels Knick oder ausgerundet gestaltet sein.

Der Innenbund 6 wiederum geht im Wesentlichen rechtwinklig in die Rastfläche 5 über, wobei der als Dichtsteg 7 ausgebildete Innenbund 6 einen geringeren Druckabfall nach innen beim Druckaufbau ermöglicht, wodurch die Tragfähigkeit des Axiallagers 1 deutlich gesteigert werden kann. Zentrisch angeordnet an dem Axiallager 1 ist eine Durchtrittsöffnung 10 für eine nicht gezeigte Welle des Abgasturboladers 1. Die Steigung der Keilfläche 4 ist dabei nicht von vornherein festgelegt, sondern kann je nach Ausführungsform des Abgasturboladers 2 und der geforderten Lagereigenschaften individuell gewählt werden. In gleicher Weise sind auch eine Dichtfläche 11 am Innenbund 6, die Öltasche 3 bzw. die Rastfläche 5 hinsichtlich ihrer Maße beliebig variierbar und dadurch optimierbar.

Wie den gezeichneten Ausführungsformen des Axiallagers 1 / Axial-/Radiallager 12 zu entnehmen ist, besitzt dieses in Umfangsrichtung gleichmäßig verteilt drei Öltaschen 3, drei Rastflächen 5 sowie drei Keilflächen 4 und drei Dichtstege 7 mit gehörigem Innenbund 6. Selbstverständlich können dabei auch mehr oder weniger (bspw. eine oder zwei) Öltaschen 3, Rastflächen 5, Keilflächen 4, etc. jeweils gepaart vorgesehen werden.

Auch kann ein Abgasturbolader 2 mit einem erfindungsgemäßen Axiallager 1 und/oder einem kombinierten Axial-/Radiallager 12 mit zumindest einem solchen Axiallager 1 ausgestattet sein.

Betrachtet man beispielsweise die Fig. 4, so kann man erkennen, dass zumindest die dort gezeigte Keilfläche 4 und die dort gezeigte Rastfläche 5 den Innenbund 6 und/oder den Außenbund 8 berühren, das heißt diese direkt kontaktieren. Die Rastfläche 5 geht zudem unterbrechungsfrei und fluchtend in den Innenbund 6 und den Außenbund 8 und damit in die beiden Dichtstege 7,9 über.

Insbesondere gibt es keinen Spalt zwischen der Rastfläche 5 bzw. der Keilfläche 4 und dem Innenbund 6 und/oder dem Außenbund 8. Die beiden Dichtstege 7,9, das heißt, die beiden Bünde 6,8, erfüllen somit nicht nur eine Dichtfunktion, sondern beeinflussen auch den Druckaufbau im Bereich der Keilfläche 4.

Mit dem erfindungsgemäßen Axiallager 1 / Axial-/Radiallager 12 ist eine besonders leichtgängige Lagerung einer Welle und damit eines Rotors eines Abgasturboladers 2 in Axialrichtung möglich, wodurch die Reibleistung und damit indirekt auch der Kraftstoffverbrauch und verbunden damit die CO₂-Emissionen eines Verbrennungsmotors reduziert werden können. Das erfindungsgemäße Axiallager 1 / Axial-/Radiallager 12 lässt sich darüber hinaus kostengünstig herstellen, beispielsweise als Blechformteil.

## Patentansprüche

1. Axiallager (1) oder kombiniertes Axial-/Radiallager (12), insbesondere für einen Abgasturbolader (2), das im Wesentlichen eine scheiben- oder zylinderförmige Gestalt und eine zentrisch angeordnete Durchtrittsöffnung (10) für eine Welle aufweist,
**gekennzeichnet durch** wenigstens
- eine kreissegmentartige Öltasche (3),
- eine sich daran kreissegmentartig anschließende Keilfläche (4),
- eine sich an die Keilfläche (4) anschließende Rastfläche (5),
- einen ringsegmentförmig verlaufenden Innenbund (6), der als Dichtsteg (7) ausgebildet ist und vorzugsweise unterbrechungsfrei in die Rastfläche (5) übergeht.

2. Axiallager oder kombiniertes Axial-/Radiallager nach Anspruch 1,
**dadurch gekennzeichnet,**
**dass** die Keilfläche (4) eine in Umfangsrichtung kontinuierliche oder diskontinuierliche Steigung aufweist.

3. Axiallager oder kombiniertes Axial-/Radiallager nach Anspruch 1 oder 2,
**dadurch gekennzeichnet,**
**dass** ein zumindest ringsegmentförmig verlaufender Außenbund (8) vorgesehen ist, der als Dichtsteg (9) ausgebildet ist.

4. Axiallager oder kombiniertes Axial-/Radiallager nach einem der Ansprüche 1 bis 3,
**dadurch gekennzeichnet,**
**dass** die Rastfläche (5) in Radialrichtung verläuft.

5. Axiallager oder kombiniertes Axial-/Radiallager nach einem der Ansprüche 1 bis 4,
**dadurch gekennzeichnet,**
**dass** der Innenbund (6) oberflächenfluchtend in die Rastfläche (5) übergeht.

6. Axiallager oder kombiniertes Axial-/Radiallager nach einem der Ansprüche 1 bis 5,
**dadurch gekennzeichnet,**
**dass** der Innenbund (6) rechtwinklig in die Rastfläche (5) übergeht.

7. Axiallager oder kombiniertes Axial-/Radiallager nach einem der Ansprüche 1 bis 6,
**dadurch gekennzeichnet,**
**dass** das Axiallager (1) oder das kombinierte Axial-/Radiallager (12) auf zumindest einer Seite drei Öltaschen (3), drei Rastflächen (5), drei Keilflächen (4) und drei Dichtstege (7) aufweist.

8. Axiallager oder Axial-/Radiallager nach einem der Ansprüche 1 bis 7,
**dadurch gekennzeichnet,**
**dass** zumindest eine Keilfläche (4) und/oder zumindest eine Rastfläche (5) den Innenbund (6) und/oder den Außenbund (8) berührt, das heißt diese(n) kontaktiert.

9. Axiallager oder Axial-/Radiallager nach einem der Ansprüche 1 bis 8,
**dadurch gekennzeichnet,**
**dass** zumindest eine Rastfläche (5) unterbrechungsfrei und fluchtend in den Innenbund (6) und/oder den Außenbund (8) übergeht.

10. Abgasturbolader (2) mit wenigstens einem Axiallager (1) oder einem kombinierten Axial-/Radiallager (12) mit den Merkmalen gemäß einem der Ansprüche 1 bis 9.
